# EUROPEAN PATENT APPLICATION

(11) **EP 2 341 645 A1**
(43) Date of publication of application: **06.07.2011**
(21) Application number: 11159909.8
(22) Date of filing: 09.06.2006
(51) Int. Cl.: H04B 13/02

(54) **Underwater communications system**

(30) Priority: 13.06.2005 GB 0511939; 08.02.2006 GB 0602398
(62) Divisional of application: 06744172.5
(71) Applicant: WFS Technologies Limited, Livingston West Lothian EH54 5BZ (GB)
(72) Inventor: Rhodes, Mark, South Queensferry, Lothian EH30 9RG (GB); Hyland, Brendan, Edinburgh, EH10 6HQ (GB); Wolfe, Derek, Linlithgow, Lothian EH49 6DS (GB)
(74) Representative: Dixon, Philip Matthew

(57) **Abstract**

An underwater communications system for transmitting electromagnetic and/or magnetic signals to a remote receiver, the system having a data input; a digital data compressor for compressing data that is to be transmitted; a modulator for modulating the compressed data onto a carrier signal and an electrically insulated, magnetic coupled antenna for transmitting the compressed, modulated signals.

## Description

### Introduction

The present invention relates to an underwater communications system that uses electromagnetic propagation and magnetic induction as means of transmission, and optimises the distance that can be achieved by digital transmission of information.

### Background

Various underwater communication systems are known. One of the most common is based on acoustic techniques. A problem with such systems is that they are degraded by noise and interference from a number of sources. They are also subject to multipath effects and in some environments are virtually unusable. Other underwater communication systems use radio links, e.g. extreme low frequency electromagnetic signals, usually for long-range communications between a surface station and a submerged vessel. These systems typically operate in the far field using physically large electric field coupled antennas and support data rates up to a few bits per second.

WO01/95529 describes an underwater communications system that uses electromagnetic signal transmission. This system has a transmitter and a receiver, each having a metallic, magnetic coupled aerial surrounded by a waterproof electrically insulating material. Use of electrically insulated magnetic coupled antennas in the system of WO01/95529 provides various advantages. This is because magnetically coupled antennas launch a predominantly magnetic field. A similar arrangement is described in GB2163029. Whilst the communications systems of WO01/95529 and GB2163029 have some technical advantages over more conventional acoustic or radio link systems, the functionality described is limited, and for many practical applications the available bandwidth is highly restrictive, as is distance over which data can be transmitted.

Magnetic antennas formed by a wire loop, coil or similar arrangements create both magnetic and electromagnetic fields. The magnetic or magneto-inductive field is generally considered to comprise two components of different magnitude that, along with other factors, attenuate with distance (r), at rates proportional to 1/r² and 1/r³ respectively. Together they are often termed the near field components. The electromagnetic field has a still different magnitude and, along with other factors, attenuates with distance at a rate proportional to 1/r. It is often termed the far field or propagating component.

Signals based on electrical and magnetic fields are rapidly attenuated in water due to its partially electrically conductive nature. Seawater is more conductive than fresh water and produces higher attenuation. Propagating radio or electromagnetic waves are a result of an interaction between the electric and magnetic fields. The high conductivity of seawater attenuates the electric field. Water has a magnetic permeability close to that of free space so that a purely magnetic field is relatively unaffected by this medium. However, for propagating electromagnetic waves the energy is continually cycling between magnetic and electric field and this results in attenuation of propagating waves due to conduction losses.

The attenuation losses, the bandwidth restrictions and the limited distances over which data can be transmitted all pose significant practical problems for underwater communications.

### Summary of the Invention

According to a first aspect of the invention, there is provided an underwater communications system for transmitting data to a remote receiver, the system having a data input; a data compressor for compressing data that is to be transmitted; a modulator for modulating the compressed data onto a carrier signal and an electrically insulated, magnetic coupled antenna for transmitting the compressed, modulated signals.

By compressing the data prior to transmission, the occupied transmission bandwidth can be reduced. This allows use of a lower carrier frequency, which leads to lower attenuation. This in turn allows communication over greater transmission distances, thereby significantly alleviating the difficulty of communication through water. Digital representation of audio and or video, data compression and transmission at the lowest practicable frequency are therefore particularly advantageous in the subsea environment and represents a key innovation.

Preferably, the system includes data/text entry means, such as a keypad, and/or audio means for capturing audio signals and/or video means, such as a camera, for capturing an image. Having inputs, such as a text entry pad and a camera, provides an extended functionality device, and extends the range of device applications. Alternative approaches such as employing speech to text conversion and text to speech offer additional bandwidth reduction and therefore range benefits.

A display may be provided so that text/data entered and/or video/images can be viewed prior to transmission.

Preferably, the communications module includes a receiver that has an electrically insulated, magnetic coupled antenna for receiving electromagnetic signals. In this case, the module is preferably operable to present received text/data and/or video/images on the module display. The transmitter and the receiver may share a single electrically insulated, magnetic coupled antenna.

The system may be configured to change the carrier frequency to optimise the information communication rate for the transmission range and conditions encountered. The system may be configured to establish a connection; commence transmission at a first frequency; once communication is established, vary the frequency and select the frequency based on the received signal strength.

The magnetic coupled antenna may be based on loops or solenoids. The solenoid may be formed around a high magnetic permeability material. The insulated antenna may be surrounded with a low conductivity material with permittivity matched to that of the propagation medium e.g. distilled water.

To further improve communications, the transmission distance has to be taken into account. For example, for short distance transmission, the magnetic components provide the greater signal, whereas longer distances are best served by the electromagnetic component. Hence for short distance communications, near field transmission is preferred, whereas for longer distance communications, far field transmission is preferred. Whether the magnetic components or the electromagnetic component dominate is a matter dependent on the application of the invention and the distance over which it is deployed.

According to another aspect of the invention, there is provided an underwater communications system including: an underwater transmitter having an electrically insulated, magnetic coupled antenna for transmitting electromagnetic signals to a receiver, and an underwater receiver having an electrically insulated, magnetic coupled antenna for receiving signals from the underwater transmitter, wherein the transmitter and receiver are adapted to communicate when the near fields of the transmitting antenna and receiving antenna overlap. The near field may be defined approximately as the region where the 1/r² and 1/r³ varying terms are greater than the propagating 1/r term (where r = radial distance).

Near field subsea magneto-inductive communications links can support much higher carrier frequencies than possible in the far field. In turn, communication in the near field allows a significantly higher signal bandwidth than is available for far field transmissions. While the near field components are relatively greatest close to an antenna, their rate of decline with distance is faster than that of the far field component. When the antenna is magnetic, the important advantage of lower loss is gained over conventional electromagnetic antennas of the types commonly used in free space. In addition the relative initial strength of the magnetic field in comparison with the electromagnetic field is considerably greater still.

According to yet another aspect of the present invention, there is provided an underwater communications system including a transmitter for transmitting electromagnetic signals to a remote receiver, and a receiver for receiving signals from the transmitter, wherein at least one of the transmitter and receiver is underwater and has an electrically insulated, magnetic coupled antenna. One of the transmitter and receiver may be above water and may have an electrically coupled antenna.

According to still another aspect of the present invention, there is provided an underwater communications system including a transmitter for transmitting electromagnetic signals to a remote receiver, and a receiver for receiving signals from the transmitter, wherein at least one of the transmitter and receiver includes means for varying the signal gain. This is advantageous for systems in which one or both antennas may be subjected to wave wash, where the antenna is periodically partially or wholly immersed in water. By providing means for varying the gain, performance can be maintained even when one or more of the antennas is subject to wave wash.

According to yet another aspect of this invention, there is provided an underwater communications system comprising means for transmitting electromagnetic signals and means for transmitting acoustic signals. In use, the system is controlled such that the optimal route for communication is utilized be it either electromagnetic or acoustic.

In any of the systems in which the invention is embodied, the transmitter and receiver may be positioned relatively close to the surface of the water and the signal directed toward the surface in preference to the path directly between the two locations. This arrangement takes advantage of the propagation path through the water to air interface horizontally along the surface and back below the surface to the receiver. Beyond a given range, which varies with each specific geometric arrangement, this air path provides a lower loss route than the direct through water path. The effect is due to the high relative dielectric constant of water of around 80. This results in a high angle of refraction such that electromagnetic signals incident on the surface are refracted over a wide range of incident angles to create a horizontal wave. For the same reason, a component of the signal is coupled back into the water as the horizontal signal propagates allowing reception at the receiver location. Because of the lower attenuation in air, using an air path increases the horizontal range of the signal.

### Brief Description of Drawings

Various aspects of the invention will now be described by way of example only and with reference to the accompanying drawings, of which:
Figure 1 is a block diagram of an underwater transceiver;
Figure 2 shows the attenuation typically experienced by a signal propagating in seawater, and how its attenuation expressed in decibels increases approximately in proportion to the square root of frequency;
Figure 3 is a block diagram of an underwater transmitter for use in the transceiver of Figure 1;
Figure 4 is a block diagram of an underwater receiver for use in the transceiver of Figure 1;
Figure 5 is a block diagram of an underwater antenna for use in the transmitter of Figure 3 and receiver of Figure 4;
Figure 6 is a block diagram of a system for allowing underwater diver-to-diver voice communications;
Figure 7 is a block diagram of a system for allowing underwater diver-to-diver text communications;
Figure 8 is a block diagram of a system for reduced bandwidth voice communications using speech recognition and speech synthesis techniques to allow narrow bandwidth text transmission;
Figure 9 is a block diagram of a system for allowing underwater video communications;
Figure 10 is a block diagram of a mesh network for use in an underwater communications system;
Figure 11 is a block diagram of a water to surface communication system;
Figure 12 is a block diagram of a communication system typically for an autonomous underwater vehicle;
Figure 13 shows a modulation signal for use in a signal modulation scheme;
Figure 14 show a transmission scheme that employs guard bands, and
Figure 15 is a schematic view of a communications system that is operable above water and below water, as well as when the system is awash.

### Detailed Description of the Drawings

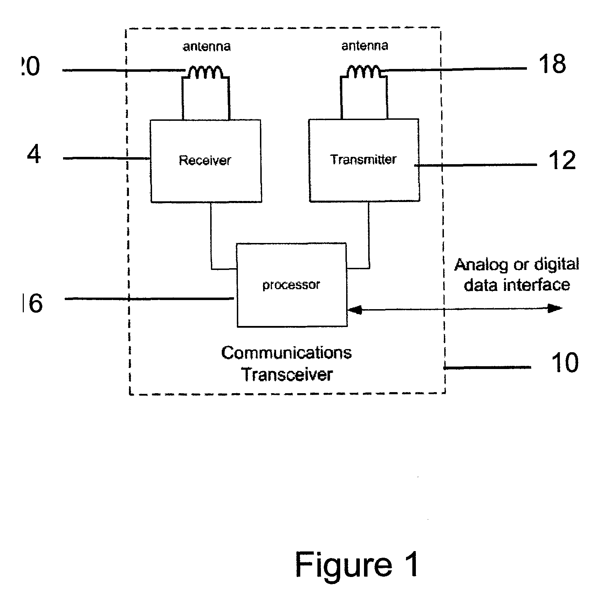

The present invention relates to various underwater communication systems that use electromagnetic waves as the propagation means. Each of these uses a communications transceiver 10 that has a transmitter 12, a receiver 14 and a processor 16 that can be connected to an analogue or digital data interface (not shown), as shown in Figure 1. Both the transmitter and receiver 12 and 14 respectively have a waterproof, electrically insulated magnetic coupled antenna 18 and 20. Alternatively a single antenna can be shared between transmitter and receiver. A magnetic coupled antenna is used because water is an electrically conducting medium, and so has a significant impact on the propagation of electromagnetic signals. Ideally, each insulated antenna assembly is surrounded by a low conductivity medium that is impedance matched to the propagation medium, for example distilled water.

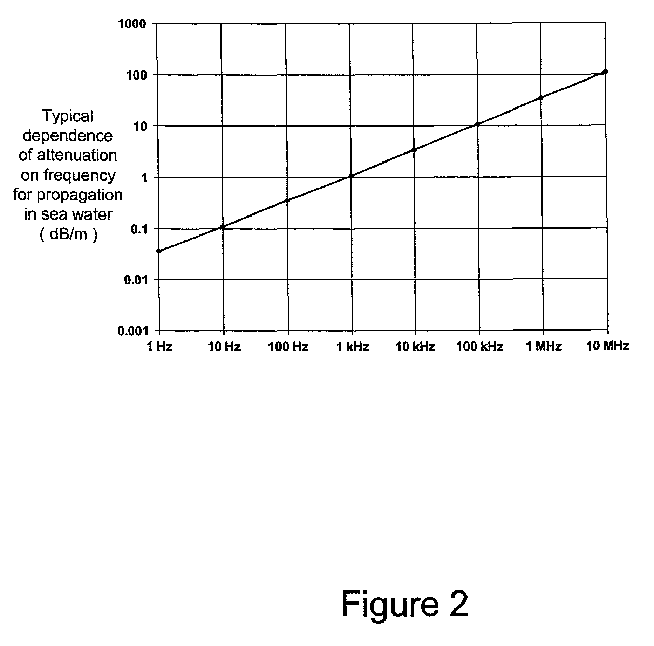

Electrically insulated magnetic coupled antennas are used in the communication systems in which the invention is embodied because in an underwater environment they are more efficient than electrically coupled antennas. Underwater attenuation is largely due to the effect of conduction on the electric field. Since electrically coupled antennas produce a higher electric field component, in water in the near field, the radiated signal experiences higher attenuation. In comparison a magnetic loop antenna produces strong magneto-inductive field terms in addition to the electromagnetic propagating field. The magneto-inductive terms are greater than the propagating field close to the transmitting antenna and provide an additional means for coupling a signal between two antennas. For both shorter and greater distances, magnetic coupled antennas are more efficient under water than electrically coupled. In applications where long distance transmission is required, the magnetic antenna should preferably be used at lowest achievable signal frequency. This is because signal attenuation in water increases as a function of increasing frequency, as shown in Figure 2. Hence, minimising the carrier frequency where possible allows the transmission distance to be maximised. In practice, the lowest achievable signal frequency will be a function of the desired bit rate and the required distance of transmission.

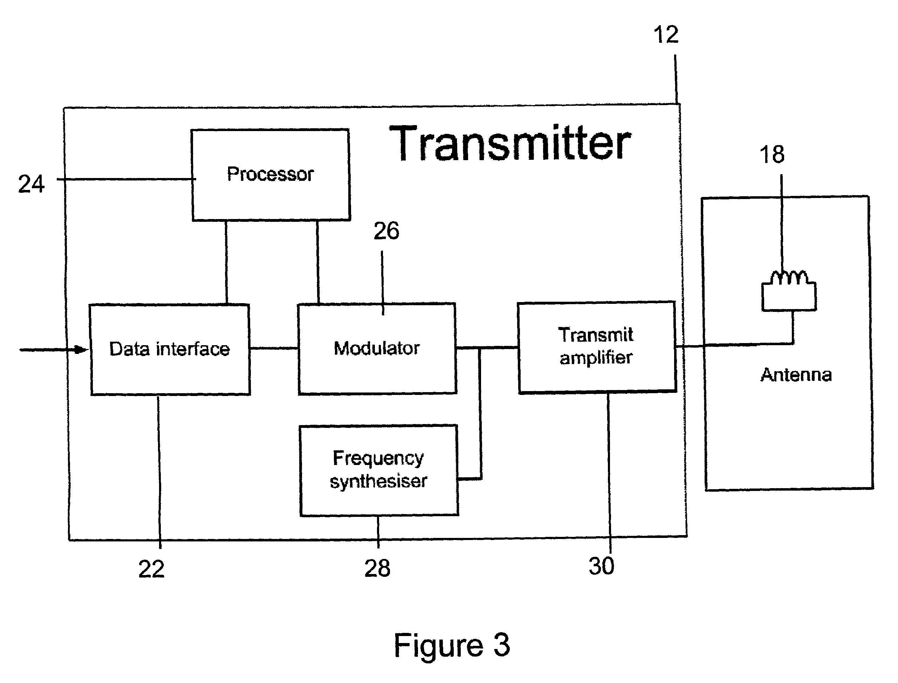

Figure 3 shows an example of a transmitter 12 for use in the transceiver 10 of Figure 1. This has a data interface 22 that is connected to each of a processor 24 and a modulator 26. The modulator 26 is provided to encode data onto a carrier wave. At an output of the modulator 26 are a frequency synthesiser 28 that provides a local oscillator signal for up-conversion of the modulated carrier and a transmit amplifier 30, which is connected to the underwater, electrically insulated magnetic coupled antenna 18. In use, the transmitter processor 24 is operable to cause electromagnetic communication signals to be transmitted via the antenna at a selected carrier frequency.

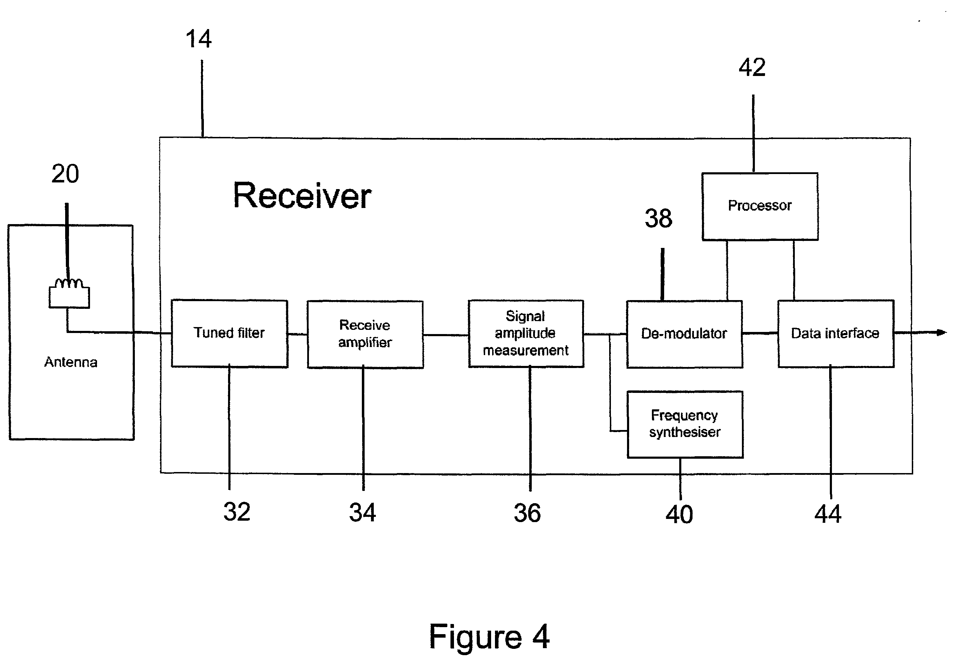

Figure 4 shows an example of a receiver 14 for use with the transceiver of Figure 1. As with the transmitter, this has an electrically insulated magnetic antenna 20 adapted for underwater usage. This antenna is operable to receive magnetic field signals from the transmitter. Connected to the antenna 20 is a tuned filter 32 that is in turn connected to a receive amplifier 34. At the output of the amplifier 34 is a signal amplitude measurement module 36 that is coupled to a de-modulator 38 and a frequency synthesiser 40, which provides a local oscillator signal for down conversion of the modulated carrier. Connected to the de-modulator 38 are a processor 42 and a data interface 44, which is also connected to the processor 42. The data interface 44 is provided for transferring data from the receiver 14 to a control or monitoring means, such as another on-board processor, which may be located in the mobile device 10 or at another remote location.

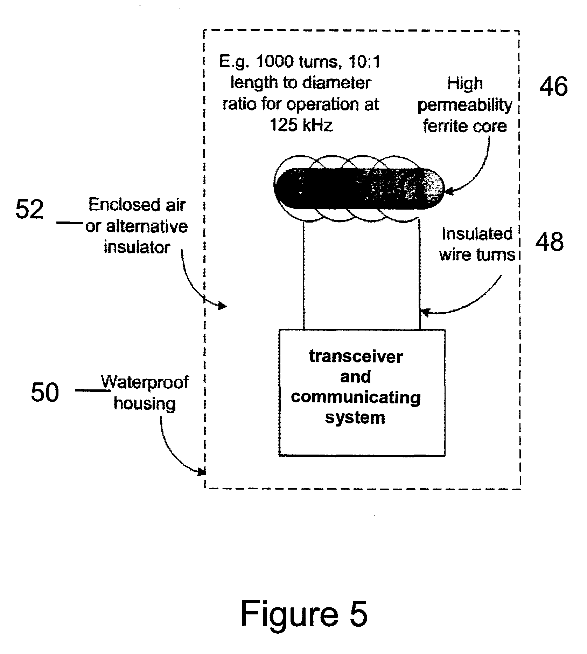

Figure 5 shows an example of an antenna that can be used in the transmitter and receiver of Figures 3 and 4. This has a high permeability ferrite core 46. Wound round the core are multiple loops 48 of an insulated wire. The number of turns of the wire and length to diameter ratio of the core 46 can be selected depending on the application. However, for operation at 125 kHz, one thousand turns and a 10:1 length to diameter ratio is suitable. The antenna is connected to the relevant transmitter/receiver assembly and is included in a waterproof housing 50. Within the housing the antenna may be surrounded by air or some other suitable insulator 52, for example, low conductivity medium such as distilled water that is impedance matched to the propagating medium.

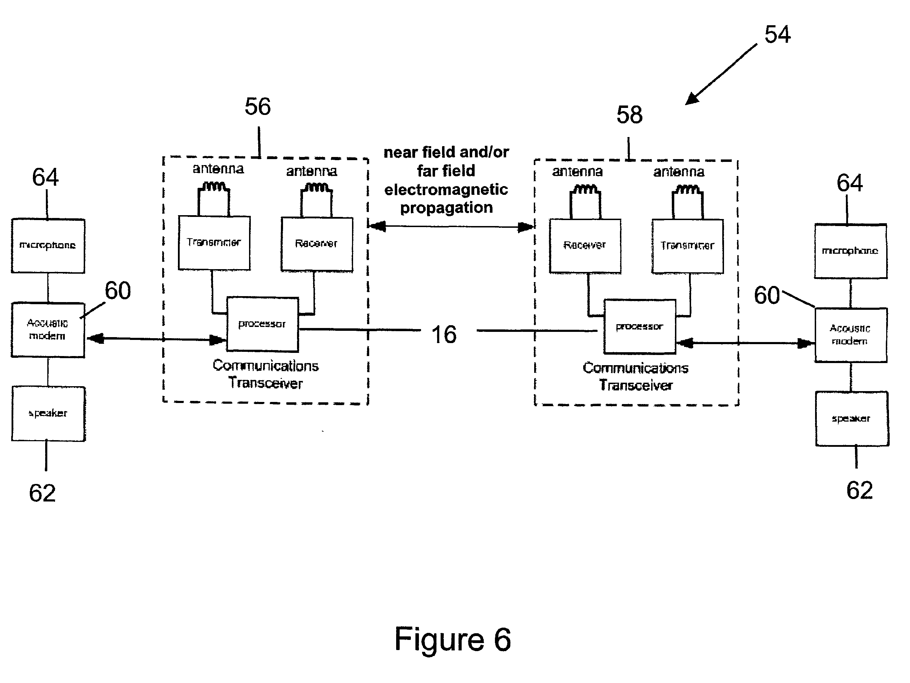

Figure 6 shows a telecommunications system 54 for underwater diver-to-diver or similar communications. This includes two telecommunications units 56 and 58, each of which includes the transceiver of Figure 1. In this case, connected to the processor 16 of the transceiver is an acoustic interface 60, which is connected between a speaker 62 and a microphone 64. The processor 16 is operable to allow voice-to-voice communication between divers using electromagnetic propagation as the communication channel. One function of the processor 16 is to convert the digital representation of analogue signals from the acoustic interface 60 to and from a highly compressed form of encoding, using known vocoder or similar techniques which greatly reduce the required bit-rate for intelligible conversation. The transmission protocol used could be point-to-point or broadcast, depending on the application. In practice, the speech compression algorithms used to reduce bandwidth and carrier frequency significantly increases the range of reception for underwater communications. In this case the carrier frequency could typically be in the range 1-100 kHz, for example 30 kHz. Techniques for allowing wireless voice-to-voice communications are known in the art and so will not be described in detail, save to say that modem vocoder techniques can achieve very low bit-rates while still ensuring good intelligibility between persons. By using such a vocoder, the low bit rates can enable greater distance to be achieved under water. In practice, the units would be included in a full-face mask, as commonly used by commercial divers, to facilitate voice communications. The speaker would form a waterproof earpiece.

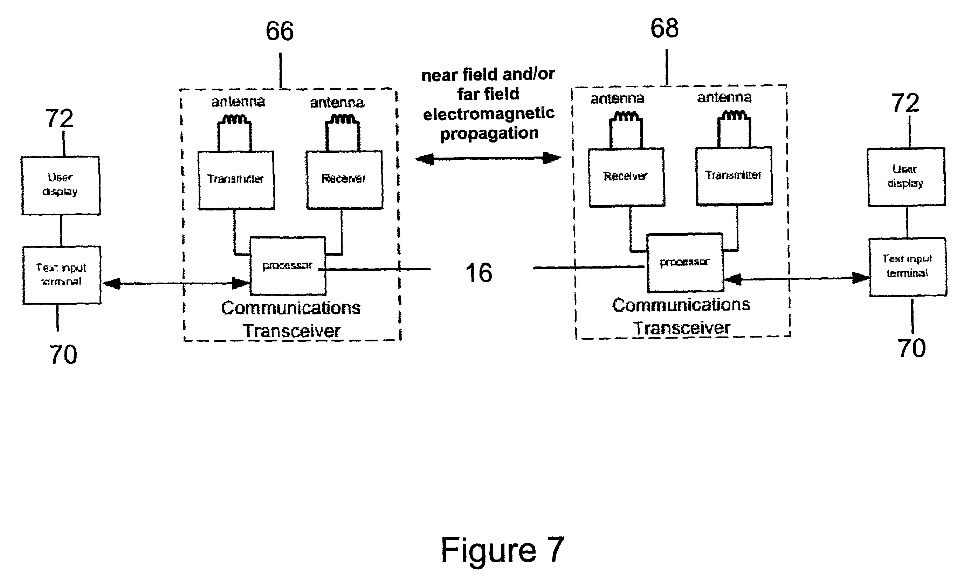

Figure 7 shows another telecommunications system for underwater diver-to-diver or similar communications that also has two telecommunications units 66, 68, each of which includes the transceiver of Figure 1. In this case, connected to the processor 16 of the transceiver is a text input 70 for allowing a user to input text messages and a display 72 for displaying such text messages. Text entered by the users is passed to the on-board processor 16 and then to the transmitter, where it is digitally modulated onto a carrier frequency and transmitted. As before, the transmission protocol used could be point-to-point or broadcast, depending on the application. Techniques for allowing mobile text communications are known in the art and so will not be described in detail. The devices of Figure 7 allow text communication between divers using electromagnetic propagation as the communication channel. Because texting is a very low data rate application, a low frequency carrier can be used which will experience a comparatively low attenuation. Signal reception should be possible in the far field. To maximise range, the carrier frequency used typically would be below 100 Hz, for example 40 Hz.

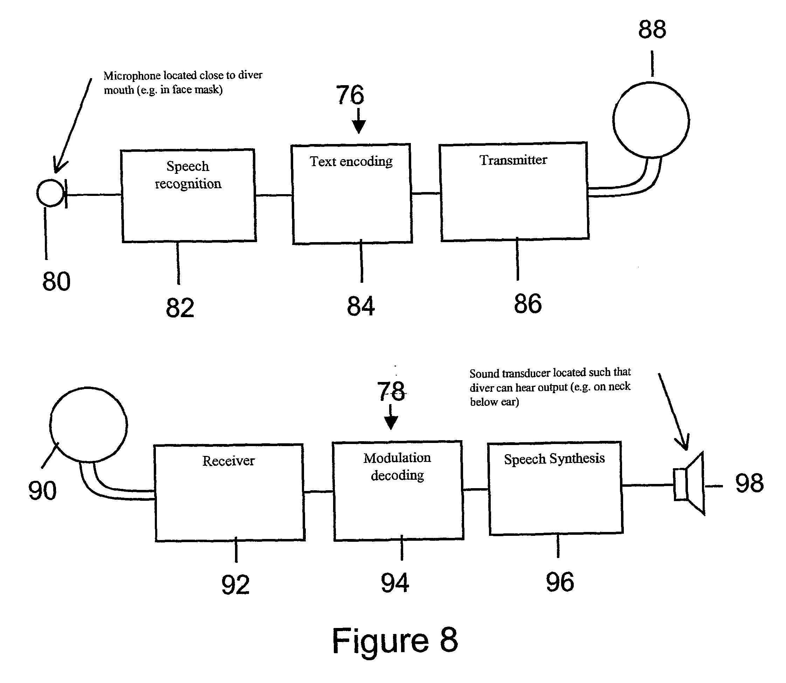

Figure 8 shows an alternative voice communications system 74 for underwater diver to diver or diver to surface communications. This also has two telecommunications units here drawn as separate transmitter and receiver units 76 and 78 respectively. The transmitter unit has a microphone 80 that is located, for example, within a diver's mask so that it is close to the diver's mouth in use. This is connected to a speech recognition module 82, which is operable to convert speech to an electronic representation of text. This can be done using commonly available speech recognition software, the output of which is a stream of characters in electronic form. Connected to the speech recognition module 82 is a text encoder 84 that is connected to a transmitter 86 that is coupled to a magnetic antenna 88. The encoder 84 converts the speech signals into text-based data. An example of a suitable format for this data may be ASCII or preferably a more efficient coding mechanism to minimise the data to be transmitted and therefore the required bandwidth. This text-based data is then modulated and transmitted by the transmitter and antenna 86 and 88 respectively to the antenna 90 and receiver 92. Connected to the receiver 92 is a demodulator 94, which is operable to recover the text data. This is processed using a speech synthesis module 96 to convert the data into artificial voice signals for the receiving party to hear. This speech signal is then fed to the receiving party using a suitable earphone, loudspeaker or other such device 98 as appropriate for the receiving party.

The system of Figure 8 is particularly beneficial since it reduces data bandwidth to the lowest practicable minimum. This allows use of a lower carrier frequency, and hence a much lower signal attenuation. Bandwidth is much smaller than alternative audio compression techniques, which must act to efficiently represent the full range of audio frequencies that comprise the human voice. In comparison, a recognition and synthesis based system only conveys the textual meaning of the speech. The system has the added advantage of being more clearly intelligible than a direct audio link. Restrictive facemasks and breathing apparatus affect speech underwater. A speech recognition algorithm can be adapted to work effectively with underwater speech. The synthesised speech re-created at the receiver will be of a much higher quality than the original.

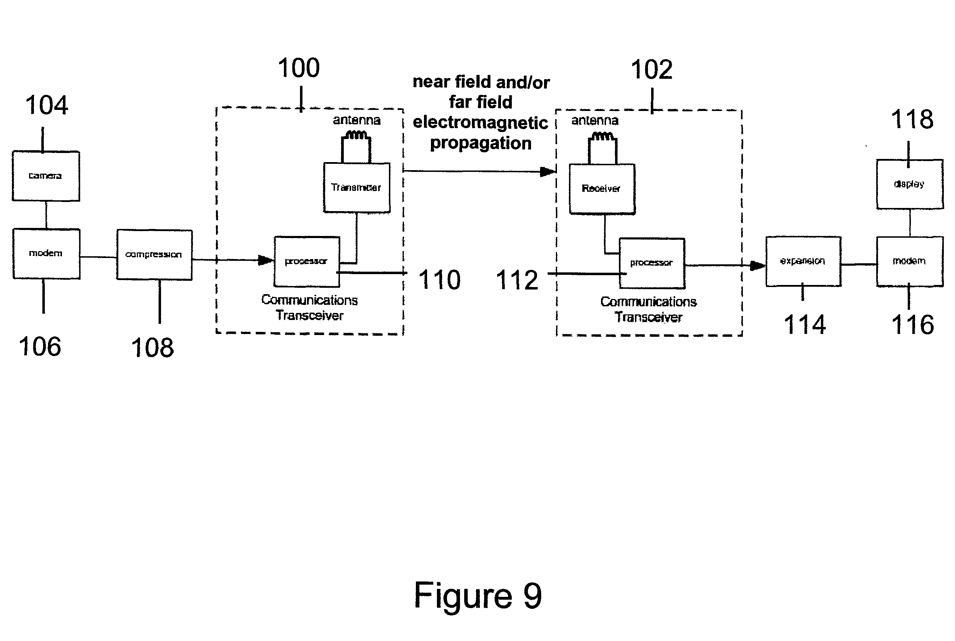

Figure 9 shows a telecommunications system for providing a video link. As before, the system has two telecommunications units 100 and 102, each of which includes the transceiver of Figure 1. However, in this case, a camera 104 is provided. The camera generates a digital format representation of image or image and sound. This is connected via a modem 106 to image compression means 108, which is connected in turn to the transceiver processor 110. Connected to the processor 112 of the other transceiver are a corresponding image decompression means 114, a modem 116 and a display 118. Images captured by the first transceiver 100 can be sent to the second transceiver 102 using near field or far field electromagnetic propagation as the communication channel, and subsequently displayed on the display. Video compression algorithms are applied to reduce the bandwidth and carrier frequency, thereby increasing the range of reception for underwater communications. In this case the carrier frequency would typically be in the range 100-200 kHz, for example 130 kHz for monochrome ¼ VGA 0.5 frames/s using mpeg4 compression. Dependent on requirements and compromises possible and acceptable in particular applications, other still more efficient encoding methods known in the literature may be used instead. Techniques for allowing video images to be sent between mobile units are known in the art and so will not be described in detail.

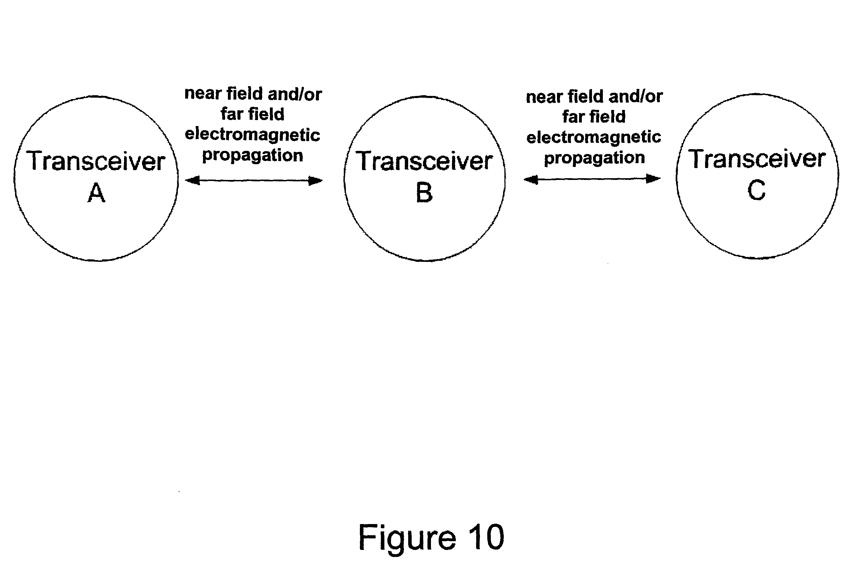

In each of the systems of Figures 6 to 9, electromagnetic signals are used to communicate between submerged stations. However, as will be appreciated, under water this provides a relatively short range, and so one of a group of mobile stations may not be able to communicate directly to another. To extend the usable range, a mesh network may be used to link between individual nodes. In this, each hop is an achievable shorter range. Repeaters extend range within a distributed ad-hoc network (mesh networking). Figure 10 shows an example of this. This includes mobile units A and C and a mesh transceiver B. Although not shown, the mesh would typically include a plurality of such transceivers B. Each transceiver of the mesh has a magnetically coupled electrically insulated antenna and each communicates with others using short-range propagation. In use, rather than signals being sent directly between mobile diver units, they are sent via the intermediate mesh transceiver B. Hence, in this case communication between A and C is possible through relay B.

US 6058071 describes a subsea radio link to a surface repeater buoy specifically for up-link to an aircraft or satellite. The following section describes an equally applicable application of surface repeater buoys deployed to link between buoys to extended underwater range. In each case the surface repeater buoy acts to receive the subsea radio signal then relays the information to a second buoy using conventional terrestrial radio means, e.g. using a higher carrier frequency.

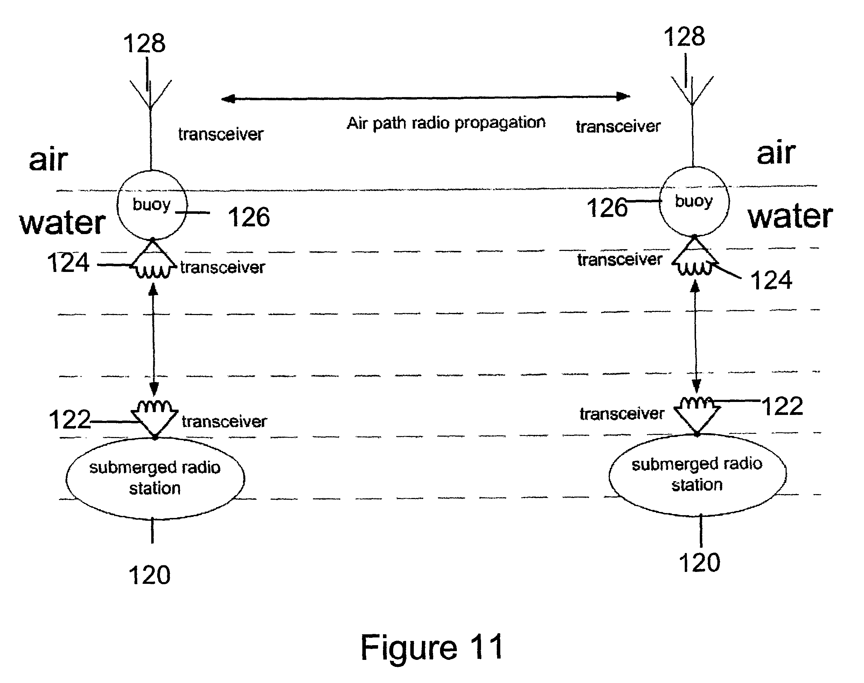

To provide an even greater communication range, signals may be sent from one underwater transceiver to another via an above-water air path. Figure 11 shows an example of this. In this case, underwater radio stations 120 are each provided with an underwater transceiver 122 that is able to communicate with other underwater transceivers 124 that are connected to, for example, buoys 126. As before, all of the underwater transceivers 122, 124 have electrically insulated magnetic coupled antennas for allowing underwater near field electromagnetic propagation. Associated with each buoy 126 is a radio transceiver 128 that is able to communicate with the underwater receiver and also to transmit and receive electromagnetic signal via an air path. Hence, the buoys 126 can effectively act as air transmission repeater relays for forwarding via an air path messages or signals originally generated underwater. In this way, signals can be sent between underwater units or between an underwater unit and a remote station over relatively long distances. This provides the possibility of long range, low data rate, low carrier frequency telemetry and remote control from underwater or surface equipment. Of course, as will be appreciated, rather than sending signals from an underwater transmitter to an underwater receiver via a surface based relays, data could merely be transmitted from an underwater transmitter to a surface based receiver. This is possible because the magnetic component of any electromagnetic signal crosses the water to air boundary with relatively low attenuation. Magnetic coupled antennas make optimal use of this property.

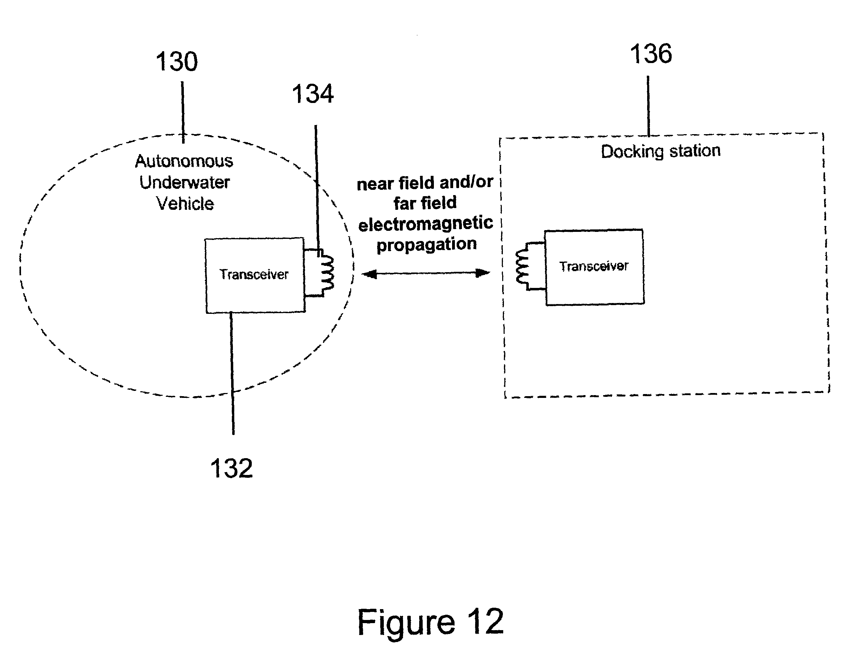

Figure 12 shows an autonomous underwater vehicle 130 that includes the transceiver 132 of Figure 1. In this case, the magnetic coupled antenna 134 is provided in the vehicle hull. Associated with the vehicle 130 is a docking station 136 that includes a corresponding transceiver 138. The vehicle and station transceivers 132 and 138 are arranged to transfer data using near field electromagnetic propagation. In practice, this means that data transfer only happens when the vehicle 130 and the station 136 are relatively close together, for example less than about two metres apart. This provides a very short range, but high bandwidth data link that allows high data transfer rates. For example, operating at a 70 MHz carrier a 10 Mbps data link could be operated over a range of 0.5m.

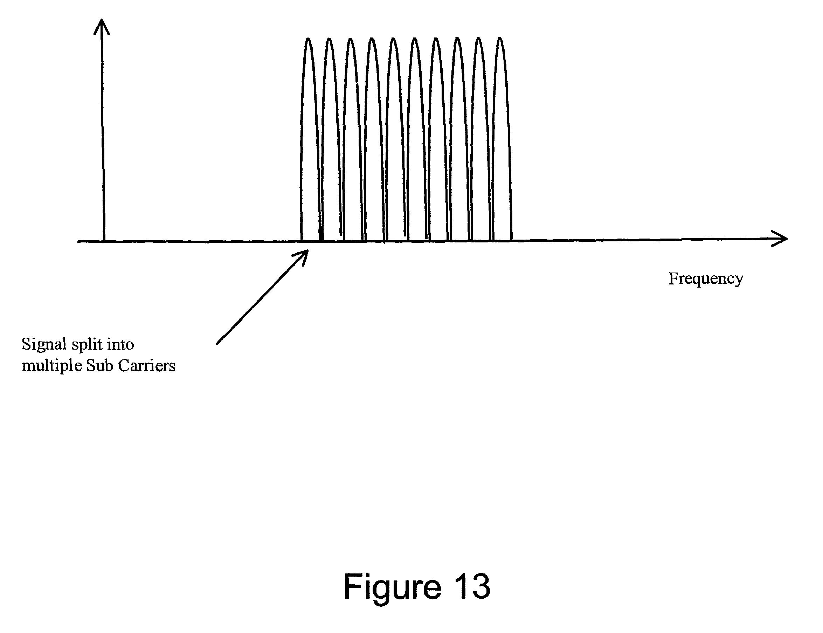

To offer improved resilience, a modulation scheme can be used in the systems described whereby the carrier is modulated by multiple narrow band sub-carriers, as shown in Figure 13. The modulation scheme may be based on orthogonal frequency division multiplexing (OFDM). The path for electromagnetic radiation exhibits dispersion such that different frequencies of modulation propagate at different speeds and are attenuated by differing amounts resulting in distortion of the signal at the receiving system. This effect is accentuated where a wide band modulation is used thus dispersion is more significant. In addition, the path may exhibit some degree of multi-path where other than the direct path between the communication stations, the energy may take alternative paths either reflected from objects such as the seabed or offshore structures or conducted through either the air or the seabed. Modulating the signals using multiple narrow band sub-carriers allows distortions caused by the underwater transmission path to be overcome. At the transmitter, a single data stream can be multiplexed to form many separate channels of data. Each narrow bandwidth channel is transmitted over a separate frequency channel. Each channel experiences different levels of propagation delay due to its frequency of transmission. At the receiver, the differential delay of each channel is removed and the multiple data streams re-assembled to extract the original broadband data stream.

Where modulation is used, at each transmitter the signal is modulated onto multiple narrow band sub carriers to make up the required signal bandwidth. Many suitable modulations schemes are known such as quadrature amplitude modulation (QAM) and Orthogonal Frequency Division Multiplexing (OFDM). The combined signal is then modulated onto the carrier. At the receivers, the signal is detected and split into the same multiple narrow band carriers, which are in turn demodulated to recover the information. The processing may be analogue or digital, although typically the processing will be digital. The digital implementation could employ an inverse fast Fourier Transform (FFT) to form the multiple narrow-band signals into a single carrier transmission. This may be combined with an error correction coding scheme whereby redundancy is introduced to the digital bit stream to allow detection and recovery from corruption of the signal.

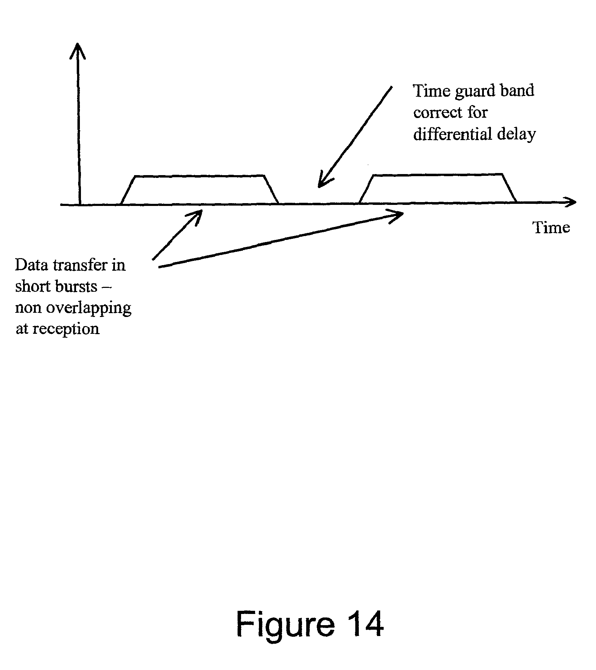

Figure 14 shows another technique that may be employed. This involves the use of guard bands between symbols, so that signals resulting from multiple paths do not interfere with adjacent symbols. This is possible because the symbol rates required on each frequency are low compared to the overall data rate of the system. For example, a system transmitting 1 million symbols per second may employ 1000 frequency channels, this being made possible by the use of digital processing techniques such as FFTs. The individual symbol rate for each channel is 1 thousand symbols per second, which is equivalent to 1ms per symbol. Over a 1km range, the multi-path effects will typically be less than 30µs so the guard band need only extend the symbol length by less than 4%.

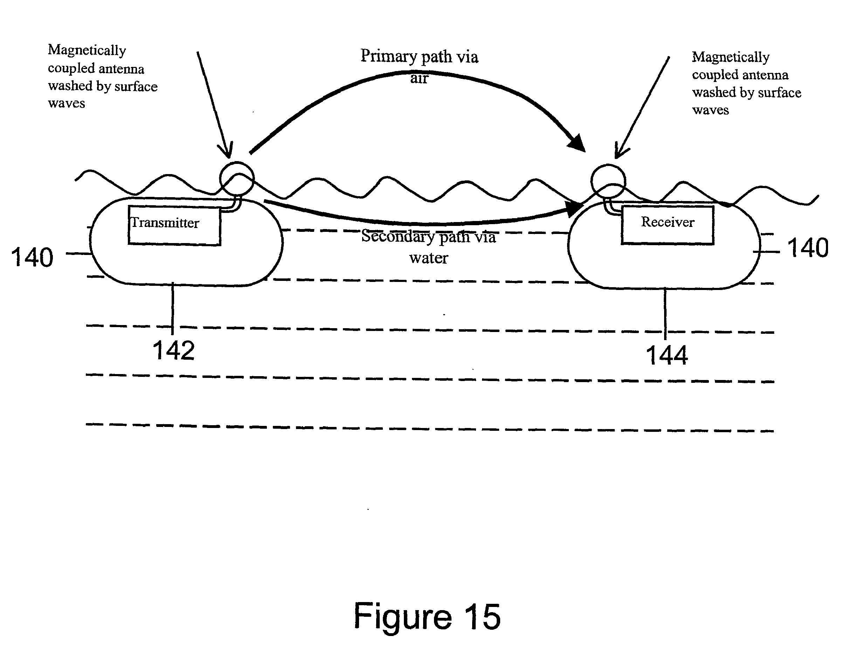

Figure 15 shows a system for allowing water-based vehicles to communicate at the surface, in particular where wave wash impinges the antenna systems. This has two stations 140, for example two mobile stations, one having the transmitter 142 of Figure 2 and the other having the receiver 144 of Figure 3, although each could in fact be a transceiver. Many marine systems are required to operate both submerged and at the surface and some are regularly awash with wave action, as shown in Figure 14. For example, autonomous underwater vehicles operate much of the time submerged. This poses a problem for communications between the AUV and surface vessels for example. Typical traditional antennas that employ electric field coupling such as dipoles are ineffective for the periods when partially or fully immersed in water. However, in accordance with the present invention, the use of magnetically coupled antennas allows communication underwater, above water and when the system is awash.

To improve performance, automatic gain control may be used to cope with the variation of signal strength caused by wave wash. Gain control can be implemented by means of a control loop. For example the received signal strength can be measured by developing a voltage across a rectifying detector diode. Amplifier gain can be controlled in response to measured signal strength to compensate for increased path loss during wave wash of the antennas. Gain control may be applied at both the receiver and the transmitter to provide additional dynamic range, the transmitter power being controlled where a two-way link allows the short-term signal path loss to be determined. This system will operate satisfactorily where one or more of the communicating antennas is wholly or partially immersed in water.

In all of the communications systems described above the operating signal carrier frequency will depend on the particular application. The carrier frequency is selected as a function of the data transfer rate and the distance over which transmission has to occur. For example, for short-range communications where a high data rate is required, a relatively high frequency would be used, for example above 1MHz. In contrast for long-range communications where attenuation losses are likely to be a problem, relatively low frequencies would be used, for example below 1Mhz, and in many cases below 100kHz.

Another technique that may be applied in any of the underwater communications systems described above involves the use of an adaptive carrier frequency based on range of operation. In this implementation, the carrier frequency employed to convey information is chosen to maximize the information rate possible for the given signal path. The most significant influence on the optimum frequency to choose will be the range between the communicating systems. One implementation uses multiple fixed frequencies that are known to all communicating stations. To first establish a connection, transmission commences on the lowest frequency. Once communication is established, the systems may then adapt the frequency of operation up and down to maximize data rate. This may be performed based on the received signal strength. An alternative scheme employs the lowest frequency at all times to maintain timing and to communicate the main frequency being chosen to carry information.

The electromagnetic communication system in which the invention is embodied may be combined with acoustic communication to provide enhanced capability. Whereas acoustic communications offer long-range capability they are limited in terms of robust operation in noisy environments and can only offer a limited bandwidth. The range of operation is limited with electromagnetic communications but it is immune to acoustic noise and has a wide bandwidth capability. By way of example a system may comprise an acoustic modem and an underwater electromagnetic communications system as described above. The two systems would be combined in a processing unit to select the communications path based on appropriate criteria. These criteria may include factors such as measured error rates, range of operation, measured signal strength or required bandwidth.

A skilled person will appreciate that variations of the disclosed arrangements are possible without departing from the invention. For example, although the various arrangements of Figures 1 to 15 are described separately, it will be appreciated that they could be used in combination. Also, whilst the systems and methods described are generally applicable to seawater, fresh water and any brackish composition in between, because relatively pure fresh water environments exhibit different electromagnetic propagation properties from seawater, different operating conditions may be needed in different environments. Optimisation for specific saline constitutions will be apparent to any practitioner skilled in this area. Accordingly the above description of the specific embodiment is made by way of example only and not for the purposes of limitation. It will be clear to the skilled person that minor modifications may be made without significant changes to the operation described.

## Claims

1. An underwater communications system comprising:
a transmitter which transmits electromagnetic signals to a remote receiver said transmitter comprising a data input;
a modulator for modulating the data onto a carrier signal; and
an electric field antenna for transmitting the modulated signals, wherein, in use, at least one of said transmitter and said remote receiver is underwater said transmitter and said receiver being operable to communicate within a near field of said electromagnetic signals, said near field of said electromagnetic signals corresponding to the region around said transmitter where at least one of inverse distance squared (1/r²) and inverse distance cubed (1/r³) field components of said electromagnetic signals is greater than an inverse distance (1/r) field component thereof.

2. The underwater communications system according to any of the preceding claims, wherein said remote receiver has an electric field antenna for receiving said electromagnetic signals and a demodulator for demodulating said electromagnetic signals.

3. The underwater communications system according to any of the preceding claims, wherein said remote receiver has a magnetic field antenna for receiving said electromagnetic signals and a demodulator for demodulating said electromagnetic signals.

4. The underwater communications system according to any of the preceding claims, said transmitter further comprising a digital data compressor for compressing data that is to be transmitted.

5. The underwater communications system of claim 4, wherein said remote receiver comprises a de-compressor for de-compressing said compressed data.

6. The underwater communications system according to any of the preceding claims, wherein said electric field antenna is formed of a long wire.

7. The underwater communications system according to any of the preceding claims, wherein said transmitter is operable to transmit signals having a frequency in the range of about 1Hz to 100MHz.

8. The underwater communications system according to any of the preceding claims, wherein at least one intermediate transceiver is provided, said intermediate transceiver being operable to pass a signal from said transmitter to said remote receiver.

9. The underwater communications system of claim 8 wherein, in use, said at least one intermediate transceiver is above water and is operable to pass a signal from said transmitter to said remote receiver through an air propagation path.

10. The underwater communications system according to any of the preceding claims, wherein a plurality of intermediate transceivers are provided.

11. The underwater communications system according to any of the preceding claims, wherein at least one of said transmitter and said remote receiver is an above water station.

12. The underwater communications system according to any of the preceding claims, wherein, in use, each said transmitter and said remote receiver is located underwater.

13. The underwater communications system according to any of the preceding claims, wherein, in use, said transmitter and said remote receiver are both located underwater, and wherein said electromagnetic signals follow a signal path which is at least partially an air path that is above water.

14. The underwater communications system according to any of the preceding claims, wherein said electromagnetic signals follow a signal path which is at least partially through the sea bed.

15. The underwater communications system according to any of the preceding claims, wherein the frequency of said carrier signal has the lowest useable value to allow a given rate of data transfer between said transmitter and said remote receiver.
